(19) Europäisches Patentamt
European Patent Office
Office européen des brevets

(11) **EP 4 703 786 A1**

(12) **EUROPEAN PATENT APPLICATION**

(43) Date of publication:
**04.03.2026 Bulletin 2026/10**

(21) Application number: **25195589.4**

(22) Date of filing: **13.08.2025**

(51) International Patent Classification (IPC):
**G02B 21/16** $^{(2006.01)}$     **G02B 21/36** $^{(2006.01)}$
**G06T 5/50** $^{(2006.01)}$

(52) Cooperative Patent Classification (CPC):
**G02B 21/16; G02B 21/367; G06T 3/4038;
G06T 5/50**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **26.08.2024 DE 102024124248**

(71) Applicant: **Carl Zeiss Microscopy GmbH
07745 Jena (DE)**

(72) Inventors:
- **LOETGERING, Lars
  07745 Jena (DE)**
- **WOLLESCHENSKY, Ralf
  07745 Jena (DE)**

(74) Representative: **Schiffer, Axel Martin
Rundfunkplatz 2
80335 München (DE)**

(54) **MICROSCOPE, METHOD FOR DETERMINING A FIELD INHOMOGENEITY IN A FIELD OF VIEW OF A MICROSCOPE AND MICROSCOPY METHOD**

(57)     The present invention is concerned with a microscope comprising light source, an illumination beam path for guiding excitation light to a sample, a detector for detecting emission light emitted by a sample, a detection beam path comprising a microscope objective for guiding the emission light to the detector, a mechanical drive for setting a relative lateral position between the sample and the microscope objective, and a control unit. The microscope is characterized in that the control unit is configured for carrying out a setting step wherein the mechanical drive is sequentially set to at least three different relative lateral positions, a collecting step wherein measurement data are collected from the detector at least for a subset of points in the sample in a field of view of the detection beam path, wherein for each of the points of the subset measurement data are collected for at least two different lateral positions of the mechanical drive, and an evaluation step wherein a field inhomogeneity in the field of view and microscopic sample information extracted from the measurement data. In further aspects, the invention relates to a method for determining a field inhomogeneity in a field of view of a microscope and a microscopy method.

FIG. 1

**Description**

In a first aspect, the present invention is concerned with a microscope according to the preamble of claim 1. In a second aspect, the invention relates to a method for determining a field inhomogeneity in a field of view of a microscope according to the preamble of claim 16. In a third aspect, the invention is directed to a microscopy method.

A generic microscope comprises a light source for supplying excitation light, an illumination beam path for guiding the excitation light to a sample space, a detector for detecting emission light emitted by a sample in the sample space, a detection beam path comprising a microscope objective for guiding the emission light to the detector, a mechanical drive for setting a relative lateral position between the sample and the microscope objective with respect to an optical axis of the microscope objective, and a control unit configured for controlling the mechanical drive and for collecting and evaluating measurement data from the detector.

A generic method for determining a field inhomogeneity in a field of view of a microscope comprises the following steps: illuminating a sample through an illumination beam path of the microscope with excitation light, guiding emission light emitted by the sample through a detection beam path comprising a microscope objective to a detector, detecting the emission light with the detector, and setting specific lateral positions between the sample and the microscope objective with respect to an optical axis of the microscope objective by means of a mechanical drive.

Modern microscopes have seen a massive improvement in the available space-bandwidth product (SBP), aiming at delivering increasing field of views at simultaneously high spatial resolution oftentimes involving mega- to gigapixel throughput. The requirement for large SBPs poses challenges to the available hardware, such as larger image sensors and the necessity for aberration-corrected objectives over large field of views.

Imaging over large field of views in turn is prone to exhibiting field inhomogeneity. A first example of inhomogeneity is vignetting, which is due to several causes: 1) light emanating from off-axis points within the field of view tends to be blocked by obstacles such as apertures and lens holders more than on-axis points. 2) The illumination profile itself is already inhomogeneous, for example because it is generated from a single mode fiber, or the condenser optics exhibit vignetting. Other effects such as an angle-dependent sensitivity of LED illumination or detector sensitivity can cause vignetting. A second example of field inhomogeneity is caused by field obstacles obstructing any plane conjugated to the specimen plane, such as field stops or specks of dust on a camera sensor. While vignetting may be described by a function that is slowly varying or smooth over the field of view, dust specks, field stops, and edges are described by abrupt changes and cannot easily be described by elementary functions, which renders the latter challenging to model, detect, and remove by parametric regression.

There is a principal distinction between prospective and retrospective methods to correct for illumination inhomogeneity [4]. Prospective correction strategies use calibration targets to measure the shading incurred by the illumination and variable detector sensitivity [1]. This step is done prior to measuring the actual specimen of interest. Prospective shading methods in some cases fail to correct for specimen-induced shading effects [1], for example when immersion objectives are used, or the specimen is embedded in a surrounding aqueous medium causing a wavefront deforming meniscus via cohesion of the liquid and sample container (e.g., multiwell plate). Hence it is not always possible to capture specimen of interest data under the same conditions as the calibration targets were measured. Moreover, calibration targets might be subject to bleaching and degrade over time in day-to-day laboratory use (accumulation of scratches and dust). Finally, calibration targets cause additional costs that must be transferred to the customer.

Several retrospective methods have been proposed for inhomogeneity correction, which involve signal post-processing strategies. For example, Preibisch et al. [2] published an image stitching module as part of the open software package Fiji. The authors mitigate shading between adjacent tiles by nonlinearly weighting pixels inside the overlapping region. While this technique yields perceptionally appealing images, in particular mitigating hard edges between neighboring tiles, the nonlinear weights used for edge blending break the linearity between multiple fluorescence channels. This is undesirable for further postprocessing such as fluorescence unmixing, or color decon-volution, which relies on linearity of the results. The same shortcoming applies to the method proposed in [3] which likewise apply nonlinear blending. Moreover, the method described in [3] is an ill-posed method, meaning there exists less data than unknown pixels of illumination and shading profile together. Thus, the method reported in [3] can only work when certain a priori assumptions about the shape and smoothness of the shading profile are satisfied.

Another routine for estimating a field inhomogeneity is based on averaging many tiles. The underlying assumption in this retrospective statistical approach is that the occurrence of specimen features is uniformly distributed across tiles. Under this assumption averaging many tiles should average out the specimen contribution (which is tile-dependent) and converge to a useful field inhomogeneity estimate (which is tile-independent) at every sensor pixel location. However, a statistical argument shows that this averaging strategy is inefficient: It can be shown that for a uniform random variable to converge to its mean value with an accuracy better than 1% several hundreds of samples (which in the present case would be equivalent in meaning to tiles) are required. Refined approaches of this averaging approach have been reported in the literature. Smith et al. [4] described a statistical setting for a retrospective method, termed CIDRE (Corrected Intensity Distributions using Regularized Energy minimization) that aims to extract robust mean estimates from a sequence of images. Unlike the naïve averaging approach described above, the approach by Smith et al. [4] removes outliers by using robust statistics.

Another method recently published is BaSiC [5], an algorithm for background and shading correction. The algorithm assumes that the set of all tiles of the specimen exhibits 1) a low-rank structure and 2) it assumes that the shading function is smooth over the field of view.

It can be considered an object of the present invention to specify a microscope, a method for determining a field inhomogeneity in a field of view of a microscope, and a microscopy method where improvements at least with respect to the precision of a determined a field inhomogeneity can be achieved.

This object is solved according to the invention by the microscope having the features of claim 1, by the method having the features of claim 16, and by the method having the features of claim 17.

The generic microscope as described above is further developed according to the invention in that the control unit is configured for carrying out the following steps: a setting step wherein the mechanical drive is sequentially set to at least three different relative lateral positions, a collecting step wherein, in each of the different relative lateral positions, measurement data are collected from the detector at least for a subset of points in the sample in a field of view of the detection beam path, wherein for each of the points of the subset measurement data are collected for at least two different lateral positions of the mechanical drive and an evaluation step wherein, based upon the measurement data collected in the collecting step, the following steps are carried out: extracting from the measurement data a field inhomogeneity in the field of view using the assumption that the field inhomogeneity is independent of the respectively set relative lateral position and extracting from the measurement data a microscopic sample information representing a portion of the measurement data caused by the sample.

According to the invention, the generic method as described above is further characterized in a setting step wherein the mechanical drive is sequentially set to at least three different relative lateral positions, a collecting step wherein, in each of the different relative lateral positions, measurement data are collected from the detector at least for a subset of points in the sample in a field of view of the detection beam path, wherein for each of the points in the subset measurement data are collected for at least two different lateral positions of the mechanical drive and an evaluation step wherein, based upon the measurement data collected in the collecting step, the following steps are carried out: extracting from the measurement data a field inhomogeneity in the field of view using the assumption that the field inhomogeneity is not dependent of the respectively set relative lateral position and extracting from the measurement data a microscopic sample information representing a portion of the measurement data caused by the sample.

The present invention furthermore claims a microscopy method comprising the following steps: a determination step wherein a field inhomogeneity in a field of view of a microscope is determined using the method for determining a field inhomogeneity in a field of view of a microscope according to the invention using a sample, a microscopy step comprising carrying out the steps of the method for determining a field inhomogeneity in a field of view of a microscope according to the invention for a sample which is different from the sample that was used in the determination step and wherein the field inhomogeneity determined in the determination step is used as an initial estimate for the field inhomogeneity.

The microscope can be any kind of light microscope. E.g., the microscope can be at least one of the following: a wide-field microscope, a scanning microscope, a confocal microscope, a light-field microscope, a light-sheet-microscope, a TIRF-microscope, a SIM-microscope.

The light source can in principle be any light source capable of providing the excitation light with a desired wavelength or desired wavelengths and with a suitable intensity. E.g., the light source can be a laser or an LED-module. The excitation light can in principle be coherent or at least partially coherent light.

The excitation light is electromagnetic radiation, in particular in the visible spectral range and adjoining ranges. The excitation light can also be termed illumination light and for the most part these two terms are used synonymously throughout this description. Light emitted by the sample to be examined as a consequence of the irradiation by the illumination or excitation light is referred to as emission light and reaches the detector, e.g., a camera, via the detection beam path. For light to qualify as emission light it is only necessary that the light comes from the illuminated sample. Typically, the emission light can be fluorescence light which the sample, in particular dye molecules present there, emits or emit as a consequence of the irradiation by the excitation light. The emission light can also be either of reflected, transmitted, and scattered illumination light. The only demand placed on the contrast-providing principle by the present invention is that the sample emits emission light as a consequence of the irradiation by the excitation light. Typically, the emission light is fluorescence light which the sample, in particular dye molecules present there, emits or emit as a consequence of the irradiation by the excitation light. The sample can also be termed a specimen.

The term illumination beam path denotes all optical beam-guiding and beam-modifying components, for example lenses, mirrors, prisms, gratings, filters, stops, beam splitters, by means of which and via which the excitation light is guided from a light source to the sample to be examined. The illumination beam path can comprise an illumination objective. The illumination objective and the microscope objective may be, in each case, microscope objectives of a type known per se. In principle, the illumination objective and the microscope objective can be separate objectives. In preferred embodiments, though, the illumination objective and the microscope objective are the same objective.

The term sample space denotes the spatial region where a sample to be investigated can be arranged. In typical embodiments, a sample can be placed or mounted, e.g., by means of a sample holder or a sample frame, on an x-y-stage which can be manipulated in lateral directions with respect to an optical axis. A z-drive can be present for varying a spacing between the sample stage and the illumination objective or between the sample and the microscope objective.

The sample can, in principle, be any kind of sample. The microscope and the methods of the invention are in particular suitable for the investigation of biological samples.

Light emitted by the sample to be examined as a consequence of the irradiation by the excitation light is referred to as emission light and reaches the detector, e.g., a camera, via the detection beam path.

The term detection beam path denotes all beam-guiding and beam-modifying optical components, for example lenses, mirrors, prisms, gratings, filters, stops, beam splitters, by means of which and via which the emission light is guided from the sample to be examined as far as the camera. Expediently, a sensor plane of the detector can be arranged in a plane which is optically conjugate to a focal plane of the microscope objective.

The field of view of the detection beam path denotes the lateral spatial portion in a sample plane from which emission light can be gathered and propagated to the detector. A size of a field of view is typically determined by the optical parameters, e.g., numerical aperture and magnification, of the microscope objective and further components in the detection beam path, e.g., a tube lens.

The type of detector for detecting the emission light being used depends generally from the type of microscope. In embodiments of the inventions, the detector can comprise a two-dimensionally spatially resolving photodetector, e.g., a camera, a one-dimensionally spatially resolving detector, e.g., a linear detector array, or a single photodetector, e.g., a dot-like photodetector. More specifically, the detector can comprise at least one of the following: CCD-element, CMOS-element, SPAD-element, PMT.

The mechanical drive for setting a relative lateral position between the sample and the microscope objective can be configured to move the sample with respect to an optical axis of the microscope objective and/or be configured to move the microscope objective and thus its optical axis with respect to the sample. The mechanical drive can be mounted to a microscope stand. The microscope stand can be an upright as well as an inverse stand.

The term control unit denotes all hardware and software components which interact with the components of the microscope according to the invention for the intended functionality of the latter. In particular, the control unit can have a computing device, for example a PC, and a camera controller capable of reading out measurement signals. Measurement data from the detector are the measurement data produced by the detector upon irradiation with emission light.

The subset of points in the sample in for which measurement data are obtained can be defined by a subset of pixels of a camera in the case where a camera is used as a detector. In cases where the microscope is a scanning microscope the subset of points can be defined by a subset of scan positions of a scanning unit and additionally also by a subset of pixels of a pixelated detector.

The term field inhomogeneity shall be understood generally as explained above, i.e., it shall comprise inhomogeneities caused by vignetting and inhomogeneities caused by field obstacles obstructing in particular any plane conjugated to the specimen plane. The term field inhomogeneity shall also cover inhomogeneities of a detection-intensity-distribution, i.e., a detection profile. The latter would play a role in the case of, e.g., a camera where the pixels have slightly different detection properties.

The vignetting can be caused by light emanating from off-axis points within the field of view tends to be blocked by obstacles such as apertures and lens holders more than on-axis points. The vignetting can be caused by intrinsic inhomogeneities of the illumination profile, stemming, e.g., from a single mode fiber and/or vignetting of a condenser optics. Finally, the vignetting can be caused by other effects such as an angle-dependent sensitivity of LED illumination or detector sensitivity. Field obstacles obstructing any plane conjugated to the specimen plane can e.g., be field stops or specks of dust on a camera sensor.

The assumption that the field inhomogeneity is independent of the respectively set relative lateral position is physically sensible because none of the described constraints causing the inhomogeneities do not depend on a relative position of the sample with respect to the optical axis of the microscope objective.

The term tile means a single image captured for one specific relative lateral position of the sample with respect to the microscope objective. A stitched image denotes the combination of a plurality of tiles collected in each case as the sample is laterally and/or axially translated. The stitching of the tiles essentially increases the field of view. Stitching means in this context that the measurement data of the individual tiles are in each case registered based on the relative positions of the tiles. Neighboring tiles are typically scanned with overlap to allow for registering and aligning joint features.

A fluorescence channel is defined as a setup of the microscope comprising a specific wavelength of the excitation light entering the sample space and a specific emission spectral filtering characteristics of the detection beam path. As generally known in the art, these parameters can be suitably adapted, e.g., to respectively used fluorophores and examined samples.

The method described here can be considered diametrically opposed to the statistical methods that are based on averaging many tiles and is in particular fundamentally different to the approach reported by Smith et al. [4]. Instead of assuming statistical independence between tiles, the microscope and the method according to the invention require high overlap, and thus a degree of correlation, between the individual tiles. Instead of hoping for naïve averaging or robust statistics to converge to the true mean of the inhomogeneity profile, the method according to the invention explicitly models a precise translation of the specimen and uses the assumption that the fluorophore density should remain constant upon translation of the specimen. Consequently, if the signal changes and bleaching is ignored, a change in a measured intensity upon specimen translation yields information about the inhomogeneity profile.

None of the widely used employed shading correction methods [1] - [5] uses explicit modeling of signal change upon translation of the specimen, from which the field inhomogeneity profile is extracted. The extraction of shading information by explicitly modeling intensity changes within highly overlapping tiles is unique to the microscope and the method according to the invention. The microscope and the method according to the invention can work in particular with as few as three tiles with a minimum overlap of 50%.

The microscope and in particular the control unit can be configured for carrying out at least one of the method for determining a field inhomogeneity in a field of view of a microscope according to the invention and the microscopy method according to the invention.

In preferred embodiments, the methods according to the invention further comprise using the microscope according to the invention.

It can be considered an important advantage of the invention, that not only the portions of the illumination inhomogeneity caused by vignetting but also the portions caused by dust specks, field stops, and edges can be captured to a high degree of accuracy.

A further important advantage of the invention is that an arbitrary sample can be used for the determination of the illumination inhomogeneity. Unlike for other methods, a specific test sample is thus not necessary.

Contrary to the method reported, e.g., in [3], for the method described in the present application no priori assumptions about the shape and smoothness of the shading profile need to be satisfied.

Unlike furthermore to the algorithm for background and shading correction described in [5] where a priori smoothness assumptions are necessary, the microscope and the method according to the invention use an explicit physical model of the change in the signal intensity as the specimen is laterally translated against an inhomogeneous illumination profile.

An important advantage of the microscopy method of the invention is that the determination of the illumination inhomogeneity can be done temporally separated, i.e., before or after an investigation of specific samples, e.g., light sensitive biological samples, to a high degree of accuracy using a light insensitive sample. This is usually feasible because, generally, any fluctuations of a light source are negligible.

Generally, the invention requires that at least three relative lateral positions be set in the setting step and that for each of the points in the subset of points, measurement data are recorded for at least two different relative lateral positions. In a preferred embodiment of the invention, the set relative lateral positions are located on a two-dimensional regular grid. The grid can, e.g., be rectangular or triangular.

The requirement that for each of the points in the subset of points, measurement data are recorded for at least two different relative lateral positions can preferably achieved in a preferred embodiment of the invention wherein the control unit is further configured in such a way that in the two-dimensional grid of set relative lateral positions in the setting step an overlap between neighboring tiles is at least 50% in a first coordinate direction. In a further preferred embodiment of the invention, the control unit is further configured in such a way that in the two-dimensional grid of set relative lateral positions in the setting step an overlap between neighboring tiles is at least 5% and preferably at least 10% in a second coordinate direction which can be in particular perpendicular to the first coordinate direction.

In a further preferred embodiment the points in the subset of points are evenly distributed over the field of view. E.g., the points in the subset of points can be located on a regular grid. The grid of the subset of points can be rectangular or triangular.

In a situation where the field inhomogeneity is to be determined to a high level of accuracy, the collecting step preferably comprises collecting measurement data for each of the points in the field of view.

In a situation where the field inhomogeneity is to be determined quickly, the evaluation step can comprise a binning of measurement data of a plurality of points, in particular a plurality of pixels.

In a situation where the field inhomogeneity is to be determined quickly and/or to only a moderate level of accuracy, it would be sufficient to evaluate only the measurement data for a subset of points. If the field inhomogeneity is to be determined to a high level of accuracy, though, the evaluation step preferably comprises evaluating the measurement data of each of the points in the field of view.

In a further preferred embodiment, the control unit is configured for carrying out the evaluation step as an iterative solution of a double blind estimation problem based upon an initial estimate of the field inhomogeneity and an initial estimate of the microscopic sample information.

More specifically, the control unit can be configured for carrying out at least some of the following steps in the evaluation step:

- calculating an estimate of the microscopic sample information based on the measurement data and using an initial estimate of the field inhomogeneity and

- iteratively calculating updated estimates of the field inhomogeneity based on the measurement data and using in each case a most recent estimate of the microscopic sample information and updated estimates of the microscopic sample information based on the measurement data and using in each case a most recent estimate of the field inhomogeneity,

- evaluating an accuracy level to which the most recent estimate of the field inhomogeneity and the most recent estimate of the microscopic sample information reproduce the measurement data,

- repeating the step of iteratively calculating updated estimates of the field inhomogeneity and updated estimates of the microscopic sample information until the measurement data are reproduced by the most recent estimate of the field inhomogeneity and the most recent estimate of the microscopic sample information to a specified level of accuracy.

Additionally or alternatively, the control unit can be further configured to carry out at least some of the following steps in the evaluation step:

- calculating an initial estimate of the microscopic sample information based on the measurement data and using an initial estimate on the field inhomogeneity;

- calculating a first updated estimate of the field inhomogeneity based on the measurement data and using the initial estimate of the microscopic sample information;

- calculating a first updated estimate of the microscopic sample information based on the measurement data and using the first updated estimate of the field inhomogeneity;

- calculating an (n+1)th updated estimate of the field inhomogeneity based on the measurement data and using the nth updated estimate of the microscopic sample information; and

- calculating an (n+1)th updated estimate of the microscopic sample information based on the measurement data and using the (n+1)th updated estimate of the field inhomogeneity.

The initial estimate of the field inhomogeneity can, e.g., be a flat profile.

In a further embodiment, the control unit can additionally or alternatively be further configured to carry out the evaluation step as a minimization of a mathematical distance between the measurement data and a combination of the field inhomogeneity and the microscopic sample information, wherein the mathematical distance is based on an arbitrary mathematical norm.

In a further embodiment, the control unit can additionally or alternatively be further configured to carry out the following steps in the evaluation step: taking a new estimate of the field inhomogeneity as a new updated estimate of the field inhomogeneity and a new estimate of the microscopic sample information as a new updated estimate of the microscopic sample information if the value of a first scalar cost function for the new estimate of the field inhomogeneity and the new estimate of the microscopic sample information is smaller than the value of the first scalar cost function for the most recent updated estimate of the field inhomogeneity and the most recent updated estimate of the microscopic sample information and if the value of a second scalar cost function for the new estimate of the field inhomogeneity and the new estimate of the microscopic sample information is smaller than the value of the second scalar cost function for the most recent updated estimate of the field inhomogeneity and the most recent updated estimate of the microscopic sample information, wherein the first scalar cost function and the second scalar cost function in each case contain a mathematical distance between the measurement data and a combination of the field inhomogeneity with the microscopic sample information and wherein the first scalar cost function contains the mathematical norm of the field inhomogeneity and the second scalar cost function $L_2$ contains the mathematical norm of the microscopic sample information.

The combination of the field inhomogeneity with the microscopic sample information can, e.g., be a product of the field inhomogeneity with the microscopic sample information.

The mathematical norm can be one of the following norms: Lp-norm, L2-norm (Euclidian norm), Manhattan-Norm (L1-Norm), infinity-norm (L∞-norm), Shannon-Entropy-norm, Jensen-Shannon-Divergence-norm, Renyi-Entropy-norm, Tsallis-Entropy-norm.

In a particularly preferred embodiment, the first cost function $L_1$ and the second cost function $L_2$ are respectively given by

$$L_1 = \frac{1}{2}\sum_x \sum_m [I(x)S(x-m) - C(x|m)]^p + \frac{\mu_1}{2}\sum_x I(x)^p$$

$$L_2 = \frac{1}{2}\sum_x \sum_m [I(x+m)S(x) - C(x+m|m)]^p + \frac{\mu_2}{2}\sum_x S(x)^p$$

wherein

$C(x|m)$       are the measurement data
$I(x)$       is the field inhomogeneity
$S(x)$       is the microscopic sample information
$\mu_1$ and $\mu_2$       are non-zero scalars
$m$       is a two-dimensional vector in the $x_1$, $x_2$-plane
$x$       is a two-dimensional vector in the $x_1$, $x_2$-plane
$p$       is a positive integer

In a preferred embodiment, p = 2, i.e., the used norm is the Euclidian norm. This minimization algorithm thus minimizes the quadratic distances between the combination of the field inhomogeneity with the microscopic sample information, e.g., the product of the field inhomogeneity with the microscopic sample information, and the measurement data.

This variant of the method for determining a field inhomogeneity in a field of view of a microscope according to the invention and/or the underlying algorithm can be termed an alternating least squares shading correction algorithm or ALS-SC algorithm.

For this embodiment, the (n+1)th updated estimate of the field inhomogeneity $I_{n+1}(x)$ can be calculated as follows:

$$I_{n+1}(x) = \frac{\sum_m S_n(x-m)C(x|m)}{\sum_m S_n(x-m)^2 + \mu_1}$$

and the (n+1)th updated estimate of the microscopic sample information $S_{n+1}(x)$ can be calculated as follows:

$$S_{n+1}(x) = \frac{\sum_m I_n(x+m)C(x+m|m)}{\sum_m I_n(x+m)^2 + \mu_2}$$

wherein

$C(x|m)$ is the measurement information
$I_{n+1}(x)$ is (n+1)th updated estimate of field inhomogeneity $I(x)$
$I_n(x)$ is the nth updated estimate of field inhomogeneity $I(x)$
$S_n(x)$ is the nth updated estimate of microscopic sample information $S(x)$
$S_{n+1}(x))$ is the (n+1)th updated estimate of microscopic sample information $S(x)$
$\mu_1$ and $\mu_2$ are non-zero scalars
$m$ is a two-dimensional vector in $x_1$, $x_2$-plane
$x$ two-dimensional vector in the $x_1$, $x_2$-plane
$p$ is a positive integer

Further properties and advantages of the invention will be described in the following in relation to the attached drawings. In the drawings,

Fig. 1      shows a schematic depiction of a microscope according to the invention;

Fig. 2      shows a schematic representation of a field inhomogeneity of a detection beam path of a microscope;

Fig. 3      shows a schematic representation a stitched image of measurement data consisting of a plurality of image tiles and showing in each case the field inhomogeneity and in some cases portions resulting from a sample;

Fig. 4       shows a schematic representation six overlapping image tiles;

Fig. 5       shows a schematic representation of used coordinates;

Fig. 6       shows a schematic representation of two overlapping image tiles;

Fig. 7       shows a schematic representation of three overlapping image tiles; and

Fig. 8       shows a further schematic representation of three overlapping image tiles.

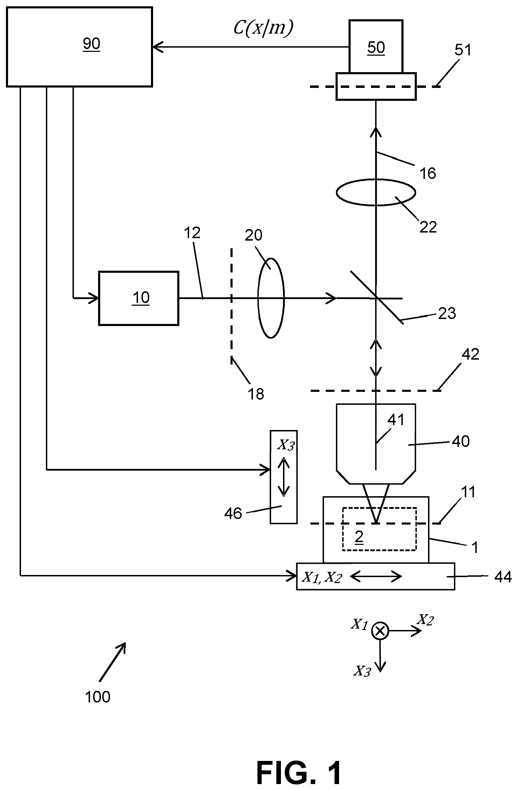

An embodiment of a microscope 100 according to the invention will be described with reference to figures 1 to 7. Identical and equivalent components are generally denoted with the same reference numbers.

First, the microscope 100 comprises a light source 10, e.g., a laser, for supplying excitation light 12 and an illumination beam path for guiding the excitation light 12 to a sample space 1. In the shown example, the illumination beam path comprises a tube lens 20, a main beam splitter 23, and a microscope objective 40. The tube lens 20 creates an intermediate image plane 18, i.e., a plane which is optically conjugate to a plane 11 in a sample 2 in the sample space 1. In the illumination beam path, the excitation light 12 travels through the intermediate image plane 18 and via the tube lens 20 to the main beam splitter 23 and is reflected there in the direction of the microscope objective 40. The excitation light 12 then passes through a back focal plane 42 of the microscope objective 40 and is subsequently guided to the sample space 1. The sample 2 can be a biological sample and can be prepared with fluorophores which can be excited by the excitation light 12. A wavelength and an intensity of the excitation light 12 can be suitably chosen with regard to the sample 2 and the used fluorophores. The light source may comprise a plurality of different lasers. The wavelength and/or the intensity can be adjustable.

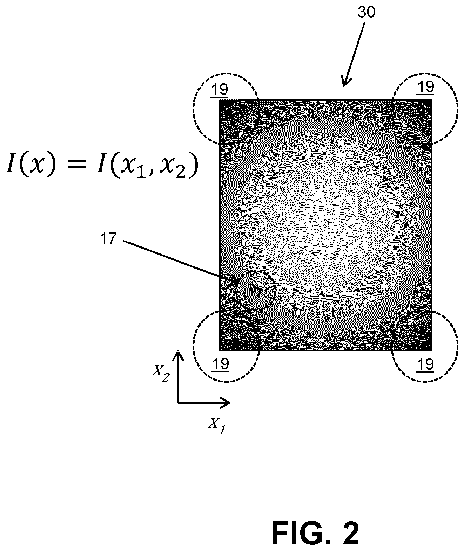

Furthermore, the microscope 100 comprises a detector 50 for detecting emission light 16 emitted by a sample 2 in the sample space 1 and a detection beam path comprising a microscope objective 40 for guiding the emission light 16 to the detector 50. In the shown example, the microscope 100 is a widefield microscope and the detector 50 is a camera, i.e., a field of view 30 (see figure 2) of the detection beam path is imaged on a sensor plane 51 of the camera 50. The sensor plane 51 is optically conjugate to the plane 11 in the sample space 1.

The emission light 16 emitted by the sample 2 can typically be red-shifted fluorescent light emitted by the fluorophores in the sample 2. The main beam splitter 23 is configured for transmitting the red-shifted emission light 16 and for reflecting the excitation light 12 thus avoiding that large portions of excitation light 12 scattered back from the sample space 1 travel in the direction of the camera 50.

In the detection beam path, the emission light 16 emitted by the sample 2 is collected by the microscope objective 40, passes through the main beam splitter 23 and is then imaged by a tube lens 22 into the sensor plane 51 of the camera 50.

As generally known in the art, an excitation filter can be present in the excitation beam path, e.g., between the tube lens 20 and the main beam splitter 23, and/or an emission filter can be present in the detection beam path, e.g., between the tube lens 22 and the main beam splitter 23. It is also possible to have a plurality of different main beam splitters 23 adapted to individual fluorophores which can be switched into the beam path.

Moreover, the microscope 100 comprises a mechanical drive 44 for setting a relative lateral position $x_1$, $x_2$ between the sample 2 and the microscope objective 40 with respect to an optical axis 41 of the microscope objective 40 and a control unit 90, e.g., a PC, which is configured for controlling the mechanical drive 44 and for collecting and evaluating measurement data from the detector 50. In the shown example, the optical axis 41 of the microscope objective 40 extends in the direction of the $x_3$-axis. The mechanical drive 44 can, e.g., be part of a motorized sample stage and, in the shown example, serves the purpose of setting a specified position of the sample 2, i.e., specified $x_1$, $x_2$-coordinates of the sample with respect to the optical axis 41. A right-handed and orthogonal coordinate system $x_1$, $x_2$, $x_3$ is shown below the mechanical drive 44. In the shown example, the microscope 100 further comprises an axial drive 46 serving the purpose of setting a specified axial distance, i.e., a distance in the $x_3$-direction between the sample and the microscope objective 40.

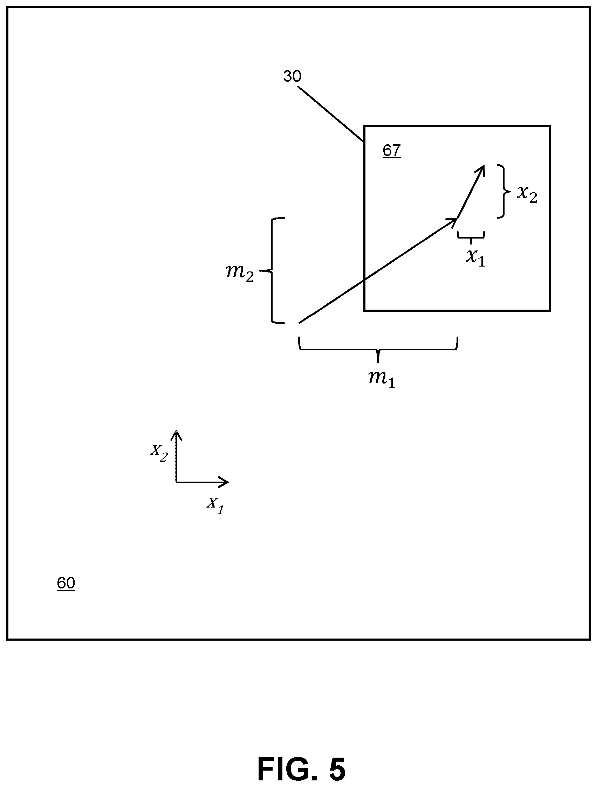

According to the invention, the control unit 90 is configured for carrying out a setting step wherein the mechanical drive is sequentially set to at least three different relative lateral positions m where m denotes a two-dimensional vector $(m_1, m_2)$ in the $x_1$, $x_2$-plane. To each specific relative lateral location position m corresponds a different section or tile of the sample 2. Measurement data collected by the camera 50 are denoted with $C(x|m)$ wherein x is a two-dimensional vector denoting detector coordinates in a suitable frame of reference. E.g., the origin is in the center of a camera chip. Figure 5 shows an exemplary vector $(m_1, m_2)$ in the $x_1$, $x_2$-plane for a tile 67 corresponding to field of view 30 located in a specific relative lateral location position within an image 60 as defined by $(m_1, m_2)$ as well the respective coordinates $x_1$, $x_2$ within the tile 67.

According to the invention, the control unit 90 is further configured for carrying out a collecting step wherein, in each of the different relative lateral positions m, measurement data $C(x|m) = C(x_1, x_2|m)$ are collected from the detector 50 at least for a subset of points in the sample 2 in the field of view 30 of the detection beam path. For each of the points of the subset measurement data are collected for at least two different lateral positions m of the mechanical drive 44. The latter feature can, e.g., be realized in an embodiment where the set relative lateral positions m are located on a two-dimensional regular grid configured in such a way that an overlap between neighboring tiles is at least 50% in a first coordinate direction $x_1$.

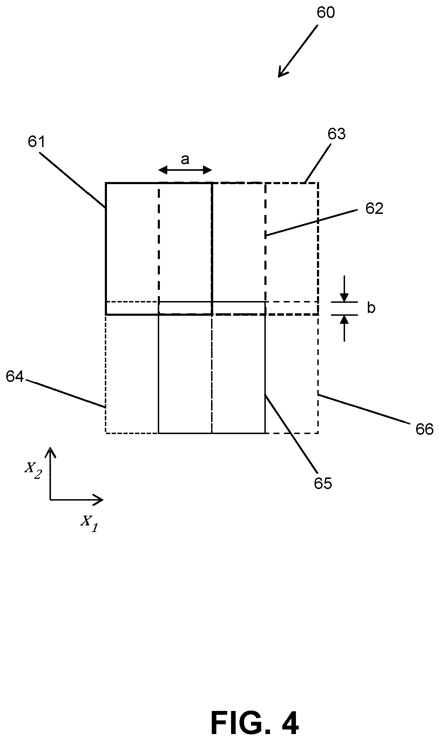

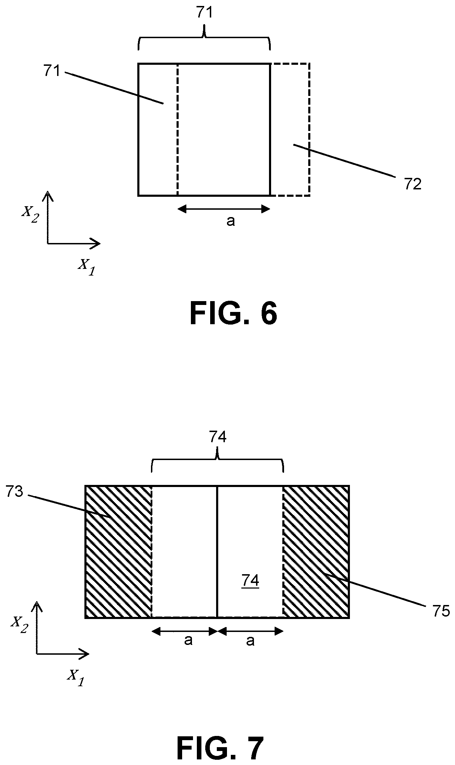

This is schematically depicted in figures 6 and 7. Figure 6 shows a first tile 71 and a second tile 72 of the same size which overlaps with the first tile 71 in the first coordinate direction $x_1$. The overlap a amounts to more than 50% of the width of the tiles 71 and 72 in the first coordinate direction $x_1$. Figure 7 shows tiles 73, 74, and 75 having, in each case, the same size. There, exactly half of tile 73 overlaps with tile 74 and the other half of tile 74 overlaps with tile 75, i.e., the overlap a is, in each case, exactly 50% in the first coordinate direction $x_1$. The two-dimensional grid of set relative lateral positions m can be configured in such a way that an overlap b between neighboring tiles is at least 5% and preferably at least 10% in a second coordinate direction $x_2$ which is in particular perpendicular to the first coordinate direction $x_1$. This schematically depicted in figure 4. Figure 4 shows six identical tiles 61,.., 66 which overlap, in each case, by an amount of 50% (arrow a), with the respective neighbors in the first coordinate direction $x_1$ and by an amount of 10% (arrows b) with the respective neighbors in the second coordinate direction $x_2$. The points in the subset of points can be evenly distributed over the field of view, e.g., on a rectangular grid.

Figure 2 depicts schematically the field of view 30 as seen by the camera 50 without any contributions from a sample. This can be thought of as the image of a totally homogeneous sample. The image shows a field inhomogeneity $I(x)$ = $I(x_1, x_2)$ which in the shown example consists essentially of vignetting 19, i.e., a reduced intensity or shading, in the corner regions. Also, a speck of dust 17 is shown which can be, e.g., in the plane 51 of the camera 50. While the vignetting has a smooth progression, the speck of dust 17 has a comparatively sharp contour. By definition, the field inhomogeneity $I(x)$ comprises the profile of the detected radiation without any contribution from the sample 2. The vignetting 19 in the corners is caused by the optical properties of the light source 10, the illumination beam path, the detection beam path and the camera. The speck of dust 17, in the shown example, is located in the camera 50. Therefore, the structure of the field inhomogeneity $I(x)$ is not dependent on the specifically set relative lateral position m and, as such, shows in each of the recorded tiles.

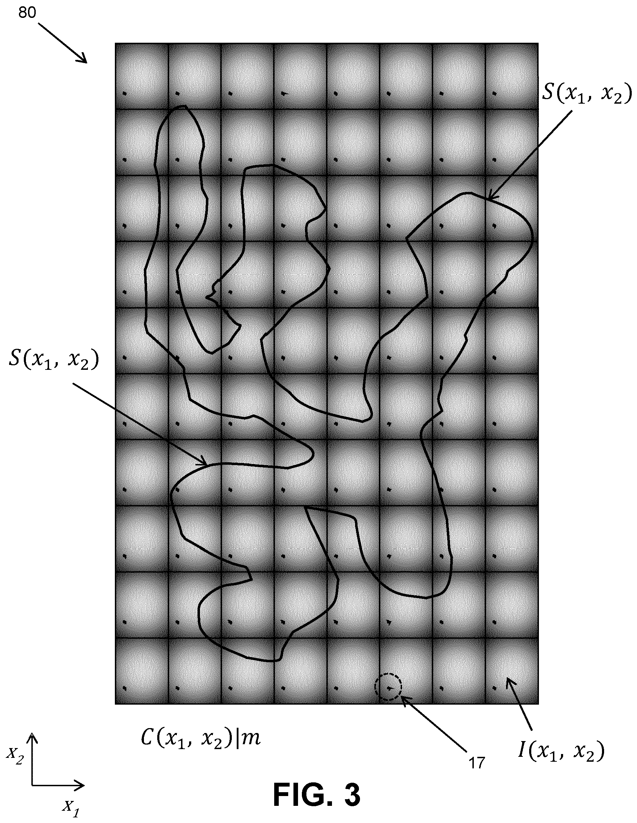

This will be explained further with respect to figure 3. Figure 3 schematically shows a stitched image 80 consisting of 80 individual tiles depicting in each case the respectively captured measurement data $C(x|m) = C(x_1, x_2|m)$ from the detector 50. The set relative lateral positions m are be located on a two-dimensional regular grid, namely on a rectangular grid. As can be seen, each and every one of the tiles shows the same field inhomogeneity $I(x)$. Additionally, at least some of the tiles show contributions $S(x) = S(x_1, x_2)$ of a sample. It has to be noted that figure 3 serves only the purpose of illustrating the fact that the field inhomogeneity $I(x)$ is present in each of the tiles. Figure 3 does not show overlapping tiles. As such, the image 80 can be thought of as a showing, e.g., only half of the tiles that were measured in total.

In reality an image can consist of several hundreds of image tiles fused together into a whole slide image of a sample. Notably, the image in figure 3 exhibits shading artefacts across each tile, resulting in a checkerboard-like artefact in the fused whole slide image. The present invention describes a novel, non-parametric field inhomogeneity removal technique that produces both an estimate of the shading profile depicted in figure 2 and a corrected micrograph of the specimen, i.e., a microscopic sample information.

In this regard, according to the invention, the control unit 90 is further configured for carrying out an evaluation step wherein, based upon the measurement data $C(x|m)$ collected in the collecting step, the following steps are carried out:

- extracting from the measurement data $C(x|m)$ the field inhomogeneity $I(x)$ in the field of view using the assumption that the field inhomogeneity $I(x)$ is independent of the respectively set relative lateral position m and

- extracting from the measurement data $C(x|m)$ the microscopic sample information S(x) representing a portion of the measurement data $C(x|m)$ caused by the sample 2.

The control unit 90 of the microscope 100 can in particular be configured for carrying out the method according to the invention. The methods according to the invention can comprise using the microscope 100.

Removal of field inhomogeneity artefacts from microscopy data can be considered an inverse problem. Ignoring multiple scattering of light inside thick specimens, it is possible to model the measurement data, e.g., a camera signal $C(x|m)$, as a product of an illumination profile, i.e., the field inhomogeneity $I(x)$, and a specimen profile, i.e., the microscopic sample information $S(x)$ as follows:

$$C(x|m) = I(x)S(x - m)$$

Herein, $x$ is again two-dimensional vector denoting detector coordinates in a suitable frame of reference. Typically the origin is in the center of a camera chip and $m$ is the two-dimensional translation vector describing the lateral shift the sample 2 experiences by translation by the mechanical drive 44. The goal is to estimate the field inhomogeneity $I(x)$ and the microscopic sample information $S(x)$ from a sequence of measurement data, e.g., a sequence of camera images for a set of variable translation vectors m.

The control unit 90 can be configured for carrying out the evaluation step as an iterative solution of a double blind estimation problem based upon an initial estimate of the field inhomogeneity $I(x)$ and an initial estimate of the microscopic sample information S(x). More specifically, the control unit 90 can be further configured to carry out the evaluation step as a minimization of a mathematical distance between the measurement data $C(x|m)$ and a combination of the field inhomogeneity $I(x)$ and the microscopic sample information $S(x)$, wherein the mathematical distance is based on an arbitrary mathematical norm.

Still more specifically, the control unit 90 can be configured for carrying out at least some of the following steps in the evaluation step:

- calculating an estimate of the microscopic sample information $S(x)$ based on the measurement data $C(x|m)$ and using an initial estimate of the field inhomogeneity $I_0(x)$ and

- iteratively calculating

  - updated estimates of the field inhomogeneity $I_{n+1}(x)$ based on the measurement data $C(x|m)$ and using in each case a most recent estimate of the microscopic sample information $S_n(x)$ and

  - updated estimates of the microscopic sample information $S_{n+1}(x)$ based on the measurement data $C(x|m)$ and using in each case a most recent estimate of the field inhomogeneity $I_{n+1}(x)$,

- evaluating an accuracy level to which the most recent estimate of the field inhomogeneity $I_{n+1}(x)$ and the most recent estimate of the microscopic sample information $S_{n+1}(x)$ reproduce the measurement data $C(x|m)$, and

- repeating the step of iteratively calculating updated estimates of the field inhomogeneity $I_{n+1}(x)$ and updated estimates of the microscopic sample information $S_{n+1}(x)$ until the measurement data $C(x|m)$ are reproduced by the most recent estimate of the field inhomogeneity $I_{n+1}(x)$ and the most recent estimate of the microscopic sample information $S_{n+1}(x)$ to a specified level of accuracy.

Still more specifically, the control unit 90 can be further configured to carry out some or all of the following steps in the evaluation step:

- calculating an initial estimate of the microscopic sample information $S_0(x)$ based on the measurement data $C(x|m)$ and using an initial estimate on the field inhomogeneity $I_0(x)$;

- calculating a first updated estimate of the field inhomogeneity $I_1(x)$ based on the measurement data $C(x|m)$ and using the initial estimate of the microscopic sample information $S_0(x)$;

- calculating a first updated estimate of the microscopic sample information $S_1(x)$ based on the measurement data $C(x|m)$ and using the first updated estimate of the field inhomogeneity $I_1(x)$;

- calculating an (n+1)th updated estimate of the field inhomogeneity $I_{n+1}(x)$ based on the measurement data $C(x|m)$ and using the nth updated estimate of the microscopic sample information $S_n(x)$; and

- calculating an (n+1)th updated estimate of the microscopic sample information $S_{n+1}(x)$ based on the measurement data $C(x|m)$ and using the (n+1)th updated estimate of the field inhomogeneity $I_{n+1}(x)$.

The initial estimate of the field inhomogeneity $I_0(x)$ can, e.g., be a flat profile.

Still more specifically, the control unit 90 can be further configured to find the estimates of the field inhomogeneity $I(x)$ and the microscopic sample information S(x) based on the minimaziation of scalar cost functions $L_1$, $L_2$. In this regard, the control unit 90 can be further configured to carry out the following steps in the evaluation step: taking a new estimate of the field inhomogeneity as a new updated estimate of the field inhomogeneity $I_{n+1}(x)$ and a new estimate of the microscopic sample information as a new updated estimate of the microscopic sample information $S_{n+1}(x)$ if the value of a first scalar cost function $L_1$ for the new estimate of the field inhomogeneity $I(x)$ and the new estimate of the microscopic sample information $S(x)$ is smaller than the value of the first scalar cost function $L_1$ for the most recent updated estimate of the field inhomogeneity $I_n(x)$ and the most recent updated estimate of the microscopic sample information $S_n(x)$ and if the value of a second scalar cost function $L_2$ for the new estimate of the field inhomogeneity and the new estimate of the microscopic sample information is smaller than the value of the second scalar cost function $L_2$ for the most recent updated estimate of the field inhomogeneity $I_n(x)$ and the most recent updated estimate of the microscopic sample information $S_n(x)$,

The first scalar cost function $L_1$ and the second scalar cost function $L_2$ in each case contain a mathematical distance between the measurement data $C(x|m)$ and a combination, in particular a product, of the field inhomogeneity $I(x)$ with the microscopic sample information $S(x)$. The first scalar cost function $L_1$ contains the mathematical norm of the field inhomogeneity $I(x)$ and the second scalar cost function $L_2$ contains the mathematical norm of the microscopic sample information $S(x)$.

The mathematical measure can generally be based on an arbitrary mathematical norm. Preferably, a Lp-norm is used. In that case, the following first cost function $L_1$ and second cost function $L_2$ can be used:

$$L_1 = \frac{1}{2}\sum_x \sum_m [I(x)S(x-m) - C(x|m)]^p + \frac{\mu_1}{2}\sum_x I(x)^p$$

$$L_2 = \frac{1}{2}\sum_x \sum_m [I(x+m)S(x) - C(x+m|m)]^p + \frac{\mu_2}{2}\sum_x S(x)^p$$

wherein the summations over $x$ are taken over all points in the respective tile, the summations over $m$ are taken over specific relative lateral positions $m$, and wherein $p$ is a positive integer defining the norm and $\mu_1$ and $\mu_2$ are non-zero scalars.

Preferably, $p = 2$, i.e., the used norm is the Euclidian norm. Then, an alternating least squares problem minimizing the cost functions $L_1$ and $L_2$ with respect to $I(x)$ and $S(x)$ has to be solved. Then the (n+1)th updated estimate of the field inhomogeneity can be calculated as follows:

$$I_{n+1}(x) = \frac{\sum_m S_n(x-m)C(x|m)}{\sum_m S_n(x-m)^2 + \mu_1}$$

and the (n+1)th updated estimate of the microscopic sample information is calculated can be as follows:

$$S_{n+1}(x) = \frac{\sum_m I_n(x+m)C(x+m|m)}{\sum_m I_n(x+m)^2 + \mu_2}$$

wherein $\mu_1$ and $\mu_2$ are non-zero scalars to prevent division by zero.

In the following, the minimum number of tiles needed, overlap considerations, non-measured points, as well as further algorithmic extensions will be discussed.

An overlap parameter $\delta$ can be defined to be $\delta = 1 - s/t$, where $s$ is the size of a scan step and $t$ is the lateral size of a tile.

With reference to Fig. 6, consider a $2 \times 1$ scan with an overlap parameter $\delta$ in the interval 0 to 1. In this configuration, the number of known data is given by the number of scan positions times the number of pixels measured. Let a single tile consist of $N$ pixels in total. Then there are $K = 2N$ known data in a $2 \times 1$ scan. However, the number of unknowns $U$ is always larger than the number of known data for a $2 \times 1$ scan, because one needs to estimate the shading ($N$ unknowns) and the specimen ($N$ pixels for left tile plus $(1-\delta)N$ pixels for right margin, where $\delta$ is the overlap parameter). Then, $U > K$ holds strictly for the case of a $2 \times 1$ scan.

Using the same logic as above, an $n \times 1$ scan consists of $K = n \times N$ known data as opposed to

$$U = 2N + (n-1)(1-\delta)N$$

Requiring that the number of known data is at least as large as the number of unknowns, namely $K \geq U$, yields the general condition

$$(n-2)/(n-1) \geq 1 - \delta \quad (*)$$

where $\delta$ denotes overlap and *n* is the number of scan positions. The inequality (*) above needs to be satisfied to have more data than unknowns in the inverse problem at hand.

Considering the specific case *n* = 3, for which the above condition is satisfied with equality for an overlap of 50%. This situation is depicted in Fig. 7.

In summary, one can conclude that

1) a scan with *n* = 2 scan points and no further a priori knowledge is theoretically impossible;

2) the condition (*) needs to be satisfied for a general scan with n tiles;

3) the smallest number of scan points is *n* = 3;

4) the minimal required overlap is 50%, i.e., $\delta$ = 0,5.

The argument presented above is readily extended to two dimensions. Constraint counting once again yields that the number of scan points need to be $n \geq 3$. In the special case of *n* = 3 an example would be an equilateral triangle scan grid.

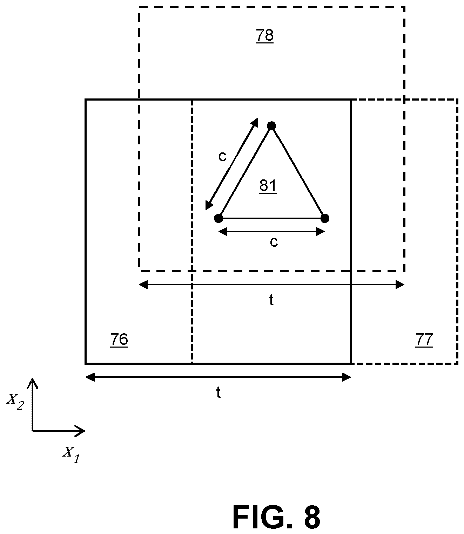

This is schematically as depicted in figure 8 where three identical and partially overlapping tiles 76, 77, 78 are shown. The tiles 76, 77, 78 are shifted with respect to each other by shifting vectors c forming a equilateral triangle. For the situation of figure 8 it can be shown that the ratio between scan step *c* and tile size *t* must satisfy

$$c/t \leq 1/\left(1 + \sqrt{3}/2\right)$$

In practice, the observed data is contaminated by noise. It is possible to improve signal-to-noise by recording more *n* > 3 scan positions at higher overlap ($\delta$ > 0,5). In addition, the specimen itself may not be densely populated with fluorophores. This opens the possibility of non-measured points in the illumination profile. In other words, one may regard the density of structures on the specimen as the sampling density of the shading and vice versa. With no structure in the illumination, every specimen measurement would look the same except a shift being introduced (the specimen brightness would not change upon lateral translation). Conversely, with no structure in the specimen, nothing can be learned about the illumination about lateral translation. A perfectly fluorescent, homogeneous sheet would look the same upon lateral translation. Likewise, a perfectly flat piece of glass would remain transparent upon lateral translation in a bright field transmission system. While in the previous example not all is lost and an empty and perfectly flat piece of glass (e.g., an empty cover glass with no dust and scratches) would allow for a so-called flatfield measurement (as used in [0] for shading correction), this technique cannot be applied to fluorescence microscopes, which by design block the light incident on the specimen after reflection into the detection path. Another challenging example for fluorescence microscopes would be the case of a single fluorescent bead would not suffice to sample a large field of view illumination profile if only a few of images are captured. In this case, there are two measures to counteract non-measured points:

1) increasing the number of scan points and the overlap so that the illumination profile is sufficiently sampled by the specimen, or

2) regression or interpolation of non-measured points from measured points.

The method for determining the field inhomogeneity in the field of view of a microscope is essentially also a method for microscopy because a sample is necessary and because, incidentally, a microscopic sample information is determined for said sample. The determined field inhomogeneity can be used, though, for the microscopy method according to the invention. I.e., first a field inhomogeneity *I*(*x*) in a field of view of a microscope is determined in a determination step using the method for determining the field inhomogeneity according to the invention and using a first sample. Then, in a microscopy step, the steps of the method for determining the field inhomogeneity according to the invention are carried for a second sample which is different from the first sample and wherein the field inhomogeneity *I*(*x*) determined in the determination step is used as an initial estimate for the field inhomogeneity *I*(*x*).

The present invention presents a method to detect and remove field inhomogeneities from captured microscopy data of various kinds, e.g., for example wide field fluorescence, transmission bright field, and laser scanning confocal. Apart from correction of inhomogeneities in the image, the detection of the field inhomogeneity can also be used to monitor its change over time. Based on such changes maintenance of the instrument alignment can be triggered. The method involves laterally translating a specimen and recording spatially overlapping data. The spatial overlap between the captured tiles enables detecting and removing field inhomogeneities computationally.

The method according to the invention can be applied to a variety of imaging systems to remove vignetting as well as field inhomogeneities. Such systems include wide field systems (e.g., the systems Axio Scan, Observer, DaVinci, Elyra, Apotome, AxioZoom, AxioVert from Carl Zeiss), scanning systems (e.g., the systems LSM, Light Sheet from Carl Zeiss), and light field systems.

Unlike parametric shading correction methods, the method according to the invention includes estimates, e.g., of dust specks on the detectors which are removed alongside vignetting effects of the illumination profile. The final obtained image is free of vignetting artefacts and obstructions caused, e.g., by dust specks on the detectors.

It is noted that the method according to the invention and in particular the ALS-SC algorithm described here works excellently for many different microscope modalities, e.g., fluorescence wide field data or transmission bright field data.

In a test of the method according to the invention for transmission bright field data the illumination was spatially partially coherent. Specifically, the illumination numerical aperture as defined by the condenser was as large as the objective numerical aperture. Thus, the method according to the invention and specifically he ALS-SC algorithm can be applied to spatially partially coherent illumination settings.

The method according to the invention was tested furthermore for measurement data from a Laser-Scanning microscope (LSM). In this regard, it is emphasized that it is not possible that the method according to the invention confuses shading with effects caused, e.g., by a tilt of the sample, which would result in reduced signal through optical sectioning. The reason is that upon lateral translation of out-of-focus portions of the specimen, the dark areas must move along with the specimen, as the specimen remains out of focus upon pure lateral translation. However, when the dark areas on the specimen remain constant upon specimen translation, the method according to the invention and in particular the ALS-SC algorithm uniquely discerns shading from sectioning in LSM systems.

List of reference numbers

**[0103]**

| | |
|---|---|
| 1 | sample space |
| 2 | sample |
| 10 | light source. e.g., laser |
| 11 | sample plane |
| 12 | excitation light |
| 16 | emission light |
| 17 | speck of dust, e.g., on detector 50 |
| 18 | intermediate image plane, optically conjugate to sample plane 11 |
| 19 | vignetting |
| 20 | tube lens in excitation beam path |
| 22 | tube lens in detection beam path |
| 23 | main beam splitter |
| 30 | field of view of detection beam path |
| 40 | microscope objective |
| 41 | optical axis of microscope objective 40 |
| 42 | back focal plane, pupil plane |
| 44 | mechanical drive for lateral manipulations |
| 46 | mechanical drive for axial manipulations |
| 50 | detector, e.g., camera |
| 51 | detection plane, optically conjugate to sample plane 11 |
| 60 | stitched image comprising 6 image tiles |
| 61-66 | image tiles |
| 67 | image tile |
| 71-78 | image tiles |
| 80 | stitched image comprising 80 image tiles |
| 81 | unit of triangular grid |
| 90 | control unit, e.g., PC |
| 100 | microscope according to the invention |
| a | overlap in the in the $x_1$-direction |
| b | overlap in the in the $x_2$-direction |
| c | size of scan step |
| $C(x\|m)$ | measurement data = measurement information |

EP 4 703 786 A1

| | |
|---|---|
| $C(x_1, x_2\|m)$ | measurement data |
| $I(x)$ | field inhomogeneity |
| $I(x_1, x_2)$ | field inhomogeneity |
| $I_0(x)$ | initial estimate of field inhomogeneity $I(x)$ |
| $I_1(x)$ | first updated estimate of field inhomogeneity $I(x)$ |
| $I_n(x)$ | nth updated estimate of field inhomogeneity $I(x)$ |
| $I_{n+1}(x)$ | (n+1)th updated estimate of field inhomogeneity $I(x)$ |
| $L_1$ | first scalar cost function |
| $L_2$ | second scalar cost function |
| $m$ | two-dimensional vector in $x_1, x_2$-plane |
| $m_1$ | component of $m$ in the $x_1$-direction |
| $m_2$ | component of $m$ in the $x_2$-direction |
| $p$ | positive integer |
| $S(x)$ | microscopic sample information |
| $S(x_1, x_2)$ | microscopic sample information |
| $S_0(x)$ | initial estimate of microscopic sample information $S(x)$ |
| $S_1(x)$ | first updated estimate of microscopic sample information $S(x)$ |
| $S_n(x)$ | nth updated estimate of microscopic sample information $S(x)$ |
| $S_{n+1}(x))$ | (n+1)th updated estimate of microscopic sample information $S(x)$ |
| $t$ | lateral size of tile |
| $x$ | two-dimensional vector in the $x_1, x_2$-plane |
| $x_1, x_2, x_3$ | right-handed orthogonal coordinate system |
| $x_1$ | component of $x$ in the $x_1$-direction |
| $x_2$ | component of $x$ in the $x_2$-direction |
| $x_3$ | direction of optical axis |
| $\mu_1$ | non-zero scalar |
| $\mu_2$ | non-zero scalar |

<u>References</u>

[0] US8253789B2

[1] Young, Ian T. "Shading correction: compensation for illumination and sensor inhomogeneities." Current Protocols in Cytometry 14, no. 1 (2000): 2-11.

[2] Preibisch, Stephan, Stephan Saalfeld, and Pavel Tomancak. "Globally optimal stitching of tiled 3D microscopic image acquisitions." Bioinformatics 25.11 (2009): 1463-1465.

[3] Legesse, Fisseha Bekele, Olga Chernavskaia, Sandro Heuke, Thomas Bocklitz, Tobias Meyer, Jürgen Popp, and Rainer Heintzmann. "Seamless stitching of tile scan microscope images." Journal of microscopy 258, no. 3 (2015): 223-232.

[4] Smith, Kevin, Yunpeng Li, Filippo Piccinini, Gabor Csucs, Csaba Balazs, Ales-sandro Bevilacqua, and Peter Horvath. "CIDRE: an illumination-correction method for optical microscopy." Nature methods 12, no. 5 (2015): 404-406.

[5] Peng, Tingying, Kurt Thorn, Timm Schroeder, Lichao Wang, Fabian J. Theis, Carsten Marr, and Nassir Navab. "A BaSiC tool for background and shading correction of optical microscopy images." Nature communications 8, no. 1 (2017): 14836.

**Claims**

1. Microscope comprising

      a light source (10) for supplying excitation light (12),

14

an illumination beam path for guiding the excitation light (12) to a sample space (1),
a detector (50) for detecting emission light (16) emitted by a sample (2) in the sample space (1),
a detection beam path comprising a microscope objective (40) for guiding the emission light (16) to the detector (50),
a mechanical drive (44) for setting a relative lateral position ($x_1$, $x_2$) between the sample (2) and the microscope objective (40) with respect to an optical axis (41) of the microscope objective (40),
a control unit (90) configured for controlling the mechanical drive (44) and for collecting and evaluating measurement data from the detector (50), **characterized in**
**that** the control unit (90) is configured for carrying out the following steps:

> a setting step wherein the mechanical drive (44) is sequentially set to at least three different relative lateral positions ($m$),
> a collecting step wherein, in each of the different relative lateral positions ($m$),
> measurement data ($C(x|m)$) are collected from the detector (50) at least for a subset of points in the sample (2) in a field of view (30) of the detection beam path, wherein for each of the points of the subset measurement data are collected for at least two different lateral positions ($m$) of the mechanical drive (44) and
> an evaluation step wherein, based upon the measurement data ($C(x|m)$) collected in the collecting step, the following steps are carried out:
>
> > • extracting from the measurement data ($C(x|m)$) a field inhomogeneity ($I(x)$) in the field of view using the assumption that the field inhomogeneity ($I(x)$) is independent of the respectively set relative lateral position ($m$) and
> > • extracting from the measurement data ($C(x|m)$) a microscopic sample information ($S(x)$) representing a portion of the measurement data ($C(x|m)$) caused by the sample (2).

2. Microscope according to claim 1,
**characterized in that**

> the set relative lateral positions ($m$) are located on a two-dimensional regular grid or
> that the set relative lateral positions ($m$) are located on a two-dimensional regular grid and that the grid is rectangular or triangular.

3. Microscope according to claim 2,
**characterized in that**

> the control unit (90) is further configured that the two-dimensional grid of set relative lateral positions ($m$) is configured in such a way that an overlap (a) between neighboring tiles (61, 62) is at least 50% in a first coordinate direction ($x_1$) and/or
> that the control unit (90) is further configured that the two-dimensional grid of set relative lateral positions ($m$) is configured in such a way that an overlap (b) between neighboring tiles (61, 64) is at least 5% and preferably at least 10% in a second coordinate direction ($x_2$) which is in particular perpendicular to the first coordinate direction ($x_1$).

4. Microscope according to one of the claims 1 to 3,
**characterized in that**

> the points in the subset of points are evenly distributed over the field of view and/or
> that the points in the subset of points are located on a regular grid and/or
> that the points in the subset of points are located on a rectangular or triangular grid.

5. Microscope according to one of the claims 1 to 4,
**characterized in that**
the collecting step comprises collecting measurement data ($C(x|m)$) for each of the points in the field of view.

6. Microscope according to one of the claims 1 to 5,
**characterized in that**
the evaluation step comprises a binning of measurement data ($C(x|m)$) of a plurality of points, in particular of a plurality of pixels, and/or that the evaluation step comprises evaluating the measurement data ($C(x|m)$) of each of the points in the field of view.

7. Microscope according to one of the claims 1 to 6,
   **characterized in that**
   the control unit (90) is configured for carrying out the evaluation step as an iterative solution of a double blind estimation problem based upon an initial estimate of the field inhomogeneity ($I(x)$) and an initial estimate of the microscopic sample information ($S(x)$).

8. Microscope according to one of the claims 1 to 7,
   **characterized in that**
   the control unit (90) is configured for carrying out at least some of the following steps in the evaluation step:

   • calculating an estimate of the microscopic sample information ($S(x)$) based on the measurement data ($C(x|m)$) and using an initial estimate of the field inhomogeneity ($I_0(x)$) and
   • iteratively calculating

   ▪ updated estimates of the field inhomogeneity ($I_{n+1}(x)$) based on the measurement data ($C(x|m)$) and using in each case a most recent estimate of the microscopic sample information ($S_n(x)$) and
   ▪ updated estimates of the microscopic sample information ($S_{n+1}(x)$) based on the measurement data ($C(x|m)$) and using in each case a most recent estimate of the field inhomogeneity ($I_{n+1}(x)$),

   • evaluating an accuracy level to which the most recent estimate of the field inhomogeneity ($I_{n+1}(x)$) and the most recent estimate of the microscopic sample information ($S_{n+1}(x)$) reproduce the measurement data ($C(x|m)$),
   • repeating the step of iteratively calculating updated estimates of the field inhomogeneity ($I_{n+1}(x)$) and updated estimates of the microscopic sample information ($S_{n+1}(x)$) until the measurement data ($C(x|m)$) are reproduced by the most recent estimate of the field inhomogeneity ($I_{n+1}(x)$) and the most recent estimate of the microscopic sample information ($S_{n+1}(x)$) to a specified level of accuracy.

9. Microscope according to one of the claims 1 to 8,
   **characterized in that**
   the control unit (90) is further configured to carry out at least some of the following steps in the evaluation step:

   • calculating an initial estimate of the microscopic sample information ($S_0(x)$) based on the measurement data ($C(x|m)$) and using an initial estimate of the field inhomogeneity ($I_0(x)$), the initial estimate of the field inhomogeneity ($I_0(x)$) being, e.g., a flat profile;
   • calculating a first updated estimate of the field inhomogeneity ($I_1(x)$) based on the measurement data ($C(x|m)$) and using the initial estimate of the microscopic sample information ($S_0(x)$);
   • calculating a first updated estimate of the microscopic sample information ($S_1(x)$) based on the measurement data ($C(x|m)$) and using the first updated estimate of the field inhomogeneity ($I_1(x)$);
   • calculating an (n+1)th updated estimate of the field inhomogeneity ($I_{n+1}(x)$) based on the measurement data ($C(x|m)$) and using the nth updated estimate of the microscopic sample information ($S_n(x)$); and
   • calculating an (n+1)th updated estimate of the microscopic sample information ($S_{n+1}(x)$) based on the measurement data ($C(x|m)$) and using the (n+1)th updated estimate of the field inhomogeneity ($I_{n+1}(x)$).

10. Microscope according to one of the claims 1 to 9,
    **characterized in that**
    the control unit (90) is further configured to carry out the evaluation step as a minimization of a mathematical distance between the measurement data ($C(x|m)$) and a combination of the field inhomogeneity ($I(x)$) and the microscopic sample information ($S(x)$), wherein the mathematical distance is based on an arbitrary mathematical norm.

11. Microscope according to claim 10,
    **characterized in that**
    the control unit (90) is further configured to carry out the following steps in the evaluation step:
    taking a new estimate of the field inhomogeneity as a new updated estimate of the field inhomogeneity ($I_{n+1}(x)$) and a new estimate of the microscopic sample information as a new updated estimate of the microscopic sample information ($S_{n+1}(x)$)

    • if the value of a first scalar cost function ($L_1$) for the new estimate of the field inhomogeneity ($I(x)$) and the new estimate of the microscopic sample information ($S(x)$) is smaller than the value of the first scalar cost function ($L_1$) for the most recent updated estimate of the field inhomogeneity ($I_0(x)$) and the most recent updated estimate of the microscopic sample information ($S_n(x)$) and

• if the value of a second scalar cost function ($L_2$) for the new estimate of the field inhomogeneity and the new estimate of the microscopic sample information is smaller than the value of the second scalar cost function ($L_2$) for the most recent updated estimate of the field inhomogeneity ($I_0(x)$) and the most recent updated estimate of the microscopic sample information ($S_n(x)$),

• wherein the first scalar cost function ($L_1$) and the second scalar cost function ($L_2$) in each case contain a mathematical distance between the measurement data ($C(x|m)$) and a combination of the field inhomogeneity ($I(x)$) with the microscopic sample information ($S(x)$) and

• wherein the first scalar cost function ($L_1$) contains the norm of the field inhomogeneity ($I(x)$) and the second scalar cost function ($L_2$) contains the mathematical norm of the microscopic sample information ($S(x)$).

12. Microscope according to claim 10 or 11,
**characterized in that**
the combination of the field inhomogeneity ($I(x)$) with the microscopic sample information ($S(x)$) is a product of the field inhomogeneity ($I(x)$ and the microscopic sample information ($S(x)$).

13. Microscope according to one of the claims 10 to 12,
**characterized in that**
that the mathematical norms is one of:

Lp-norm
L2-norm (Euclidian norm),
Manhattan-Norm (L1-Norm),
infinity-norm (L∞-norm,
Shannon-Entropy-norm,
Jensen-Shannon-Divergence-norm,
Renyi-Entropy-norm,
Tsallis-Entropy-norm.

14. Microscope according to one of the claims 11 to 13,
**characterized in that**
the first cost function ($L_1$) and the second cost function ($L_2$) are respectively given by

$$L_1 = \frac{1}{2}\sum_x \sum_m [I(x)S(x-m) - C(x|m)]^p + \frac{\mu_1}{2}\sum_x I(x)^p$$

$$L_2 = \frac{1}{2}\sum_x \sum_m [I(x+m)S(x) - C(x+m|m)]^p + \frac{\mu_2}{2}\sum_x S(x)^p$$

wherein

$C(x|m)$ are the measurement data
$I(x)$ is the field inhomogeneity
$S(x)$ is the microscopic sample information
$\mu_1$ and $\mu_2$ are non-zero scalars
$m$ is a two-dimensional vector in the $x_1$, $x_2$-plane
x is a two-dimensional vector in the $x_1$, $x_2$-plane
$p$ is a positive integer

15. Microscope according to claim 14,
**characterized in that**

the (n+1)th updated estimate of the field inhomogeneity is calculated as follows:

$$I_{n+1}(x) = \frac{\sum_m S_n(x-m)C(x|m)}{\sum_m S_n(x-m)^2 + \mu_1}$$

and that the (n+1)th updated estimate of the microscopic sample information is calculated as follows:

$$S_{n+1}(x) = \frac{\sum_m I_n(x+m)C(x+m|m)}{\sum_m I_n(x+m)^2 + \mu_2}$$

wherein
$C(x|m)$ are the measurement data
$I_{n+1}(x)$ is (n+1)th updated estimate of field inhomogeneity $I(x)$
$I_n(x)$ is the nth updated estimate of field inhomogeneity $I(x)$
$S_n(x)$ is the nth updated estimate of microscopic sample information $S(x)$
$S_{n+1}(x)$) is the (n+1)th updated estimate of microscopic sample information $S(x)$
$\mu_1$ and $\mu_2$ are non-zero scalars
$m$ is a two-dimensional vector in $x_1$, $x_2$-plane
$x$ is a two-dimensional vector in the $x_1$, $x_2$-plane
$p$ is a positive integer

16. Method for determining a field inhomogeneity in a field of view of a microscope comprising the following steps:

illuminating a sample (1) through an illumination beam path of the microscope (100) with excitation light (12),
guiding emission light (16) emitted by the sample (2) through a detection beam path comprising a microscope objective (40) to a detector (50),
detecting the emission light (16) with the detector (50),
setting specific lateral positions ($x_1$, $x_2$) between the sample (2) and the microscope objective (40) with respect to an optical axis (41) of the microscope objective (40) by means of a mechanical drive (44),
**characterized in**
a setting step wherein the mechanical drive (44) is sequentially set to at least three different relative lateral positions (m),
a collecting step wherein, in each of the different relative lateral positions (*m*), measurement data ($C(x|m)$) are collected from the detector (50) at least for a subset of points in the sample (2) in a field of view (30) of the detection beam path, wherein for each of the points in the subset measurement data are collected for at least two different lateral positions (m) of the mechanical drive (44) and
an evaluation step wherein, based upon the measurement data ($C(x|m)$) collected in the collecting step, the following steps are carried out:

extracting from the measurement data ($C(x|m)$) a field inhomogeneity ($I(x)$) in the field of view (30) using the assumption that the field inhomogeneity ($I(x)$) is not dependent of the respectively set relative lateral position (*m*) and
extracting from the measurement data ($C(x|m)$) a microscopic sample information ($S(x)$) representing a portion of the measurement data ($C(x|m)$) caused by the sample (2).

17. Microscopy method
comprising the following steps:

a determination step wherein a field inhomogeneity ($I(x)$) in a field of view of a microscope is determined using the method according to claim 16 using a sample,
a microscopy step comprising carrying out the steps of the method according to claim 16 for a sample which is different from the sample that was used in the determination step and wherein the field inhomogeneity ($I(x)$) determined in the determination step is used as an initial estimate for the field inhomogeneity ($I(x)$).

**FIG. 1**

$$I(x) = I(x_1, x_2)$$

FIG. 2

**FIG. 3**

60

61

a

63

62

b

64

66

65

$X_2$

$X_1$

# FIG. 4

**FIG. 5**

FIG. 6

FIG. 7

**FIG. 8**

Europäisches
Patentamt
European
Patent Office
Office européen
des brevets

## EUROPEAN SEARCH REPORT

Application Number

EP 25 19 5589

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/243386 A1 (KOGA SHUNICHI [JP]) 24 August 2017 (2017-08-24) | 1-6,8,9, 16,17 | INV. G02B21/16 |
| A | * paragraphs [0131] - [0165]; figures 23, 24, 25 * <br> * paragraphs [0070] - [0074]; figures 9, 10, 11, 12 * | 7,10-15 | G02B21/36 G06T5/50 |
| X | US 2014/293035 A1 (HORIE GEN [JP]) 2 October 2014 (2014-10-02) | 1-6,8,9, 16,17 | |
| A | * paragraphs [0030] - [0070]; figures 1, 2, 3, 16 * | 7,10-15 | |
| X | LV GUOXIANG ET AL: "Fusion of Medical Microscopic Images Based on Estimation and Compensation", 2007 IEEE/ICME INTERNATIONAL CONFERENCE ON COMPLEX MEDICAL ENGINEERING, 1 May 2007 (2007-05-01), pages 736-739, XP093353606, DOI: 10.1109/ICCME.2007.4381835 ISBN: 978-1-4244-1078-1 | 1-6,8,9, 16,17 | |
| A | * the whole document * | 7,10-15 | TECHNICAL FIELDS SEARCHED (IPC) |
| X | US 2022/335580 A1 (NEUMANN MARKUS [DE] ET AL) 20 October 2022 (2022-10-20) | 1-6,8,9, 16,17 | G02B G06T |
| A | * paragraphs [0012], [0014], [0038] - [0004]; figures 2, 3 * | 7,10-15 | |

The present search report has been drawn up for all claims

| Place of search | Date of completion of the search | Examiner |
|---|---|---|
| Munich | 15 January 2026 | Kaiser, Peter |

EPO FORM 1503 03.82 (P4C01)

## ANNEX TO THE EUROPEAN SEARCH REPORT
## ON EUROPEAN PATENT APPLICATION NO.

EP 25 19 5589

This annex lists the patent family members relating to the patent documents cited in the above-mentioned European search report.
The members are as contained in the European Patent Office EDP file on
The European Patent Office is in no way liable for these particulars which are merely given for the purpose of information.

15-01-2026

| Patent document cited in search report | | | Publication date | Patent family member(s) | | | Publication date |
|---|---|---|---|---|---|---|---|
| US 2017243386 | A1 | | 24-08-2017 | JP | 6487938 | B2 | 20-03-2019 |
| | | | | JP | WO2016079853 | A1 | 21-09-2017 |
| | | | | US | 2017243386 | A1 | 24-08-2017 |
| | | | | WO | 2016079853 | A1 | 26-05-2016 |
| US 2014293035 | A1 | | 02-10-2014 | CN | 104011580 | A | 27-08-2014 |
| | | | | EP | 2796916 | A1 | 29-10-2014 |
| | | | | JP | 5911296 | B2 | 27-04-2016 |
| | | | | JP | 2013132027 | A | 04-07-2013 |
| | | | | US | 2014293035 | A1 | 02-10-2014 |
| | | | | WO | 2013094273 | A1 | 27-06-2013 |
| US 2022335580 | A1 | | 20-10-2022 | CN | 115222612 | A | 21-10-2022 |
| | | | | DE | 102021203870 | A1 | 20-10-2022 |
| | | | | US | 2022335580 | A1 | 20-10-2022 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8253789 B2

**Non-patent literature cited in the description**

- **YOUNG, IAN T.** Shading correction: compensation for illumination and sensor inhomogeneities.. *Current Protocols in Cytometry*, 2000, vol. 14 (1), 2-11
- **PREIBISCH, STEPHAN** ; **STEPHAN SAALFELD** ; **PAVEL TOMANCAK**. Globally optimal stitching of tiled 3D microscopic image acquisitions. *Bioinformatics*, 2009, vol. 25 (11), 1463-1465
- **LEGESSE, FISSEHA BEKELE** ; **OLGA CHERNAVSKAIA** ; **SANDRO HEUKE** ; **THOMAS BOCKLITZ** ; **TOBIAS MEYER** ; **JÜRGEN POPP** ; **RAINER HEINTZMANN**. Seamless stitching of tile scan microscope images.. *Journal of microscopy*, 2015, vol. 258 (3), 223-232
- **SMITH, KEVIN** ; **YUNPENG LI** ; **FILIPPO PICCININI** ; **GABOR CSUCS** ; **CSABA BALAZS** ; **ALESSANDRO BEVILACQUA** ; **PETER HORVATH**. CIDRE: an illumination-correction method for optical microscopy.. *Nature methods*, 2015, vol. 12 (5), 404-406
- **PENG, TINGYING** ; **KURT THORN** ; **TIMM SCHROEDER** ; **LICHAO WANG** ; **FABIAN J. THEIS** ; **CARSTEN MARR** ; **NASSIR NAVAB**. A BaSiC tool for background and shading correction of optical microscopy images.. *Nature communications*, 2017, vol. 8 (1), 14836